(19) Europäisches Patentamt
European Patent Office
Office européen des brevets

(11) Veröffentlichungsnummer: **0 167 785 B1**

(12) **EUROPÄISCHE PATENTSCHRIFT**

(45) Veröffentlichungstag der Patentschrift: **03.08.88**

(21) Anmeldenummer: **85106661.3**

(22) Anmeldetag: **30.05.85**

(51) Int. Cl.⁴: **C 09 B 62/09**, C 09 B 62/25, C 09 B 62/513, D 06 P 3/10, D 06 P 3/66

(54) **Reaktivfarbstoffe.**

(30) Priorität: **01.06.84 DE 3420467**

(43) Veröffentlichungstag der Anmeldung: **15.01.86 Patentblatt 86/3**

(45) Bekanntmachung des Hinweises auf die Patenterteilung: **03.08.88 Patentblatt 88/31**

(84) Benannte Vertragsstaaten: **CH DE FR GB IT LI**

(56) Entgegenhaltungen:
**EP - A - 0 022 265**
**EP - A - 0 043 560**
**EP - A - 0 094 020**
**FR - A - 1 546 368**

**CHEMICAL ABSTRACTS, Band 99, Nr. 10, 5. September 1983, Seite 69, Nr. 72166a, Columbus, Ohio, US**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Schaffer, Ortwin, Dr., Bruesseler Ring 43, D-6700 Ludwigshafen (DE)**
Erfinder: **Patsch, Manfred, Dr., Fritz-Wendel-Strasse 4, D-6706 Wachenheim (DE)**

**EP 0 167 785 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Aus Chem. Abstracts, Vol. 99, 72 166a ist der Disazoreaktivfarbstoff der Formel

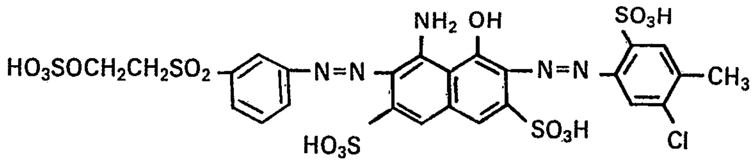

bekannt.

Die Erfindung betrifft Verbindungen der allgemeinen Formel I

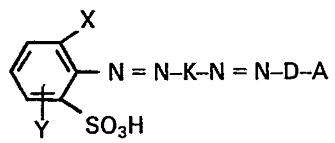

I.

in der

A einen faserreaktiven Rest aus der Chlortriazinreihe, der über eine Imino- oder Iminomethylenbrücke an den Chromophor gebunden ist,

D den Rest einer sulfogruppenhaltigen Diazokomponente der Anilin- oder Aminonaphthalinreihe,

K den Rest einer Kupplungskomponente der Aminohydroxynaphthalinreihe,

X Fluor, Chlor, Brom, $C_1$- bis $C_4$-Alkyl, Trifluormethyl, $C_1$- bis $C_4$-Alkoxy, Phenoxy, Hydroxysulfonyl, Carboxyl, Acetyl, Propionyl, Methylsulfonyl, Ethylsulfonyl, Phenylsulfonyl, $C_1$- bis $C_4$-Alkoxycarbonyl, Phenoxysulfonyl oder gegebenenfalls substituiertes Carbamoyl oder Sulfamoyl und

Y Fluor, Chlor, Brom, $C_1$- bis $C_4$-Alkyl, Trifluormethyl, $C_1$- bis $C_4$-Alkoxy, Phenoxy, Phenoxysulfonyl, Acetyl, Propionyl, Methylsulfonyl, Ethylsulfonyl, Phenylsulfonyl, p-Acetylaminophenylsulfonyl, Hydroxysulfonyl, $C_1$- bis $C_4$-Alkoxycarbonyl, Hydroxycarbonyl oder gegebenenfalls substituiertes Carbamoyl oder Sulfamoyl bedeuten.

Kupplungskomponenten K der Aminohydroxynaphthalinreihe sind vorzugsweise sulfogruppenhaltig. Beispielsweise seien genannt: 1-Amino-8-hydroxynaphthalin-4-sulfonsäure, 2-Amino-5-hydroxynaphthalin-7-sulfonsäure, 1-Amino-8-hydroxynaphthalin-4,6-disulfonsäure und insbesondere 1-Amino-8-hydroxynaphthalin-3,6-disulfonsäure.

Reste X sind neben den bereits genannten z.B.:

Methyl, Ethyl, n-Butyl, Methoxy, Ethoxy, Methoxycarbonyl, Ethoxycarbonyl, Aminosulfonyl, Dimethylaminosulfonyl, Morpholinosulfonyl, Aminocarbonyl, Dimethylaminocarbonyl oder Morpholinocarbonyl.

Der Substituent Y steht in meta- oder para-Stellung zur Azogruppe. Reste Y können im einzelnen, neben den bereits genannten, beispielsweise sein:

Methyl, Ethyl, Methoxy, Ethoxy, Methoxycarbonyl, Ethoxycarbonyl, Acetyl, Propionyl, Aminosulfonyl, Dimethylaminosulfonyl, Morpholinosulfonyl, Piperidinosulfonyl, Cyclohexylaminosulfonyl, Aminocarbonyl, Dimethylaminocarbonyl oder Morpholinocarbonyl.

Bevorzugte Reste X sind beispielsweise:

Fluor, Chlor, Brom, Methyl, Trifluormethyl, Hydroxysulfonyl, Methylsulfonyl, Ethylsulfonyl oder Hydroxycarbonyl.

Bevorzugte Reste Y stehen in p-Stellung zur Azogruppe und sind:

Fluor, Chlor, Brom, Methyl, Ethyl, Trifluormethyl, Hydroxysulfonyl, Methylsulfonyl, Phenylsulfonyl, Hydroxycarbonyl, Dimethylaminosulfonyl oder Morpholinosulfonyl.

Diazokomponentenreste D leiten sich von der Anilin- und Aminonaphthalinreihe ab und sind sulfogruppenhaltig. Im einzelnen sind beispielsweise zu nennen:

1,3-Phenylendiamin-4-sulfonsäure, 1,4-Phenylendiamin-2-sulfonsäure, 1,3-Diamino-5-sulfo-6-methoxybenzol, 1,4-Diamino-3-methoxy-6-sulfobenzol, 1,3-Diamino-4-sulfo-6-methylbenzol, 1,3-Diamino-4-sulfo-6-methoxybenzol, 1,3-Diamino-2-methyl-5-sulfobenzol, 1,3-Diamino-5-sulfo-6-chlorbenzol, 1,3-Diamino-4,6-disulfobenzol, 1,4-Diamino-2,5-disulfobenzol, 1,3-Diamino-4-sulfo-6-chlorbenzol, 1,6-Diaminonaphthalin-4-sulfonsäure, 2,6-Diaminonaphthalin-4,8-disulfonsäure, 2,6-Diaminonaphthalin-8-sulfonsäure, 5-(ω-Aminomethyl)-2-aminonaphthalin-1-sulfonsäure, 5-(ω-N-Methylaminomethyl)-2-aminonaphthalin-1-sulfonsäure, 4-(ω-N-Methyl-aminomethyl)-2-sulfoanilin, 4-(ω-Aminomethyl)-2-sulfoanilin, 3-(ω-N-Methyl-aminomethyl)-6-sulfoanilin oder 3-(ω-Aminomethyl)-4-methyl-6-sulfoanilin.

Als bevorzugte Diazokomponentenreste D sind beispielsweise zu nennen:

1,3-Phenylendiamin-4-sulfonsäure, 1,4-Phenylendiamin-2-sulfonsäure, 1,3-Phenylendiamin-4,6-disulfonsäure, 1,4-Phenylendiamin-2,5-disulfonsäure, 2,6-Diaminonaphthalin-4,8-disulfonsäure.

Die reaktiven Reste A stammen aus der Chlortriazinreihe und sind über eine Imino- oder Iminomethylenbrücke an den Chromophor gebunden. Sie entsprechen der Formel

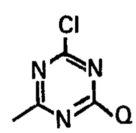

in der

Q für Chlor, Methyl, Phenyl, Methoxy, Ethoxy, Propoxy, Isopropoxy, Butoxy, 4-tert. Butyl-phenoxy oder einen Rest der Formel 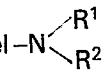 steht

und

$R^1$ Wasserstoff, eine $C_1$- bis $C_8$-Alkylgruppe, welche durch gegebenenfalls substituiertes Phenyl, durch $C_1$- bis $C_4$-Alkoxy, Hydroxy, Cyan, Amino, Chlor, Brom, Hydroxysulfonyl, Acetoxy, Hydroxycarbonyl oder Phenoxy substituiert sein kann, Cycloalkyl oder gegebenenfalls substituiertes Aryl und

$R^2$ Wasserstoff oder gegebenenfalls durch Cyan, Hydroxy oder $C_1$- bis $C_4$-Alkoxy substituiertes $C_1$- bis $C_8$-Alkyl bedeutet oder $R^1$ und $R^2$ zusammen unter Einschluss eines O- oder N-Atoms einen heterocyclischen Ring bilden.

Die Reste 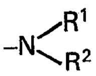 leiten sich im einzelnen beispielsweise von folgenden Verbindungen ab:

Ammoniak, Methylamin, Ethylamin, Propyl- und Isopropylamin, Dimethylamin, Ethanolamin, Diethanolamin, β-Chlorethylamin, β-Methoxyethylamin, β-(4-Sulfophenyl)-ethylamin, β-(4-Sulfophenyl)-methylamin, Aminoessigsäure, N-Methylaminoessigsäure, Taurin, N-Methyltaurin, Cyclohexylamin, Piperidin, Morpholin, Anilin, N-Methylanilin, N-Ethylanilin, N-Methyl-m-toluidin, o-, m- und p-Toluidin, o-, m- und p-Anisidin, o-, m- und p-Fluor, Chlor- und Bromanilin, Anilin-2,4-, -2,5- oder -3,5-disulfonsäure, Anilin-o-, -m- und -p-sulfosäure, o-, m- und p-Aminobenzoesäure, N-Methyl-anthranilsäure, o-, m- und p-Aminobenzoesäuremethylester, 2-Chloranilin-4- und 5-sulfonsäure, 5-Chloranilin-2-sulfonsäure, 4-Chloranilin-2- und -3-sulfonsäure, 2-Bromanilin-4-sulfonsäure, 4-Bromanilin-2-sulfonsäure, 2-Fluoranilin-4-sulfonsäure, 2-Methylanilin-4-sulfonsäure, 4-Methylanilin-2- und -3-sulfonsäure, 3-Methylanilin-4-sulfonsäure, 2-Methoxyanilin-5-sulfonsäure, 4-Methoxyanilin-2-sulfonsäure, 3-Methoxyanilin-4-sulfonsäure oder Mono- und Disulfonsäure des 1-Amino- und 2-Aminonaphthalins.

Bevorzugte Reste 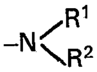 leiten sich ab von:

Ammoniak, Methylamin, Dimethylamin, Cyclohexylamin, Morpholin, Anilin, N-Methylanilin, Anilin-m- und -p-sulfonsäure, N-Methylanthranilsäure oder 1-Aminonaphthalin-4- und -6-sulfonsäure.

Substituenten A können gegebenenfalls an der Triazingruppe noch weitere reaktive Reste enthalten, die über stickstoffhaltige Brückenglieder an den Triazinkern gebunden sind. Im einzelnen sind beispielsweise zu nennen:

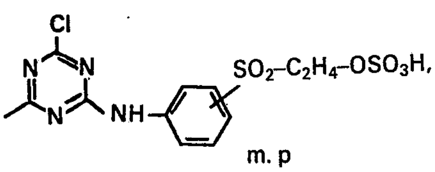

m. p

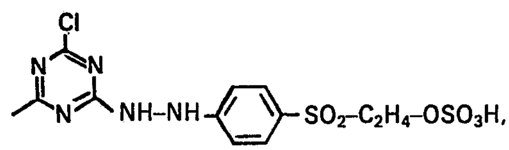

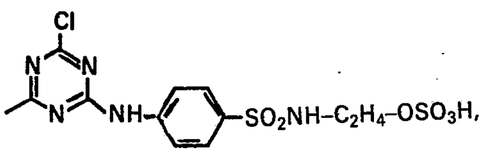

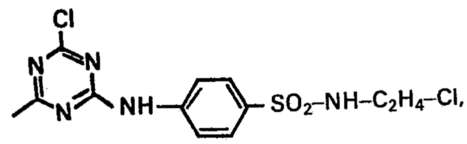

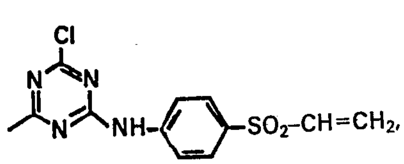

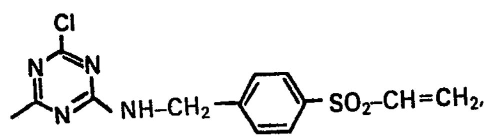

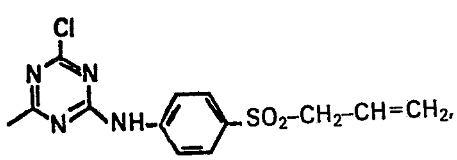

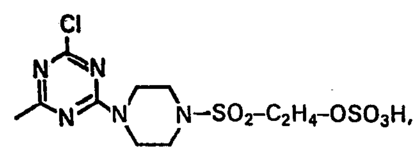

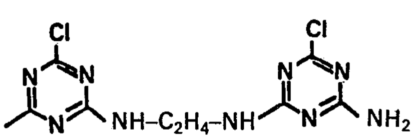

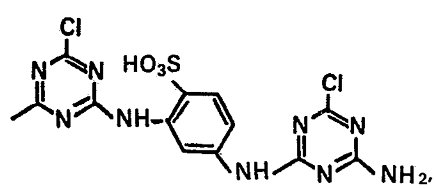

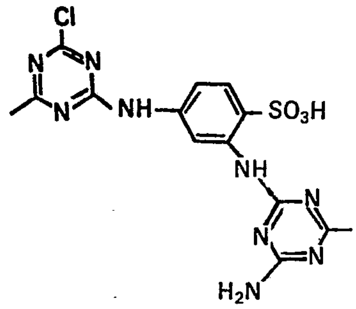

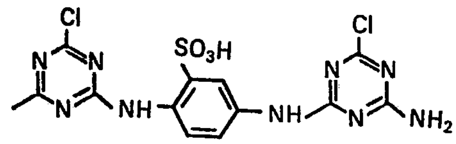

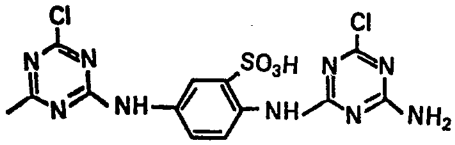

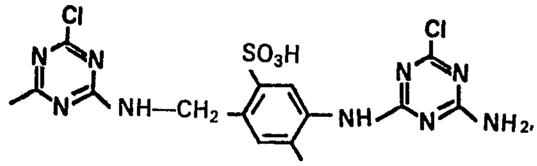

oder 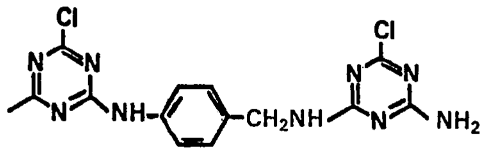

Von besonderer technischer Bedeutung sind marineblaue Verbindungen der Formel

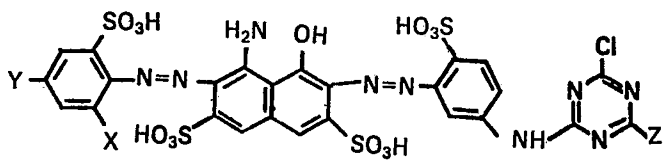

in der

Z ein Rest der Vinylsulfonreihe oder der Formel

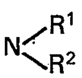 ist und $R^1$, $R^2$, X und Y die angegebene Bedeutung haben.

Die Verbindungen der Formel I eignen sich zum Färben von hydroxylgruppenhaltigen Substraten und von Wolle. Sie ergeben je nach Konstitution blauviolette bis marineblaue Färbungen, die sich im allgemeinen durch gute Ausgiebigkeit, Licht- und insbesondere gute Nassechtheit auszeichnen.

Als Färbeverfahren kommen je nach reaktivem Rest alle gebräuchlichen Verfahren in Betracht.

Die folgenden Beispiele, in denen sich Angaben über Teile und Prozente, sofern nicht anders vermerkt, auf das Gewicht beziehen, sollen die Erfindung näher erläutern.

Beispiel 1

60 Teile des durch Kupplung in mineralsaurer Lösung erhaltenen roten Monoazofarbstoffs aus diazotiertem 2-Trifluoromethyl-4-chlor-6-sulfoanilin und 1-Amino-8-hydroxynaphthalin-3,6-disulfonsäure werden bei 0–5 °C mit einer salzsauer diazotierten Suspension von 33,9 Teilen des primären Kondensationsproduktes aus 1,3-Phenylendiamin-4-sulfonsäure und Cyanurchlorid vereinigt. Durch portionsweise Zugabe von insgesamt 22,5 Teilen Natriumcarbonat wird schwach sauer ausgekuppelt, anschliessend werden 45 Teile 25%iger Ammoniak zugesetzt und bei 40–45 °C bis zur vollständigen Umsetzung gerührt. Aus neutraler Lösung wird der Farbstoff mit Kaliumchlorid abgeschieden und getrocknet. Man erhält ein blauschwarzes Pulver, das Baumwolle in echten, stark rotstichig marineblauen Nuancen färbt. Der Farbstoff entspricht der allgemeinen Formel

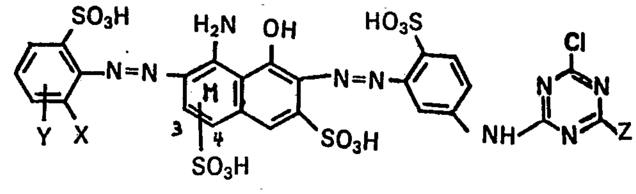

in der Y = 4-Chlor, X = Trifluormethyl und Z = Amino bedeutet und die Sulfogruppe im Ring M in 3-Stellung gebunden ist.

Weitere erfindungsgemässe Farbstoffe sind in Tabelle I aufgeführt:

*Tabelle I*

| Bsp. | Y | X | Stellung Ring M | Z | Farbton |
|---|---|---|---|---|---|
| 2 | 4–$CH_3SO_2$ | Cl | 3– | –$NH_2$ | rotst. marineblau |
| 3 | 4–$CH_3SO_2$ | Cl | 3– | 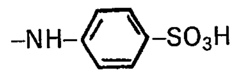 | rotst. marineblau |
| 4 | 4–$SO_3H$ | Cl | 3– | –$NH_2$ | rotst. marineblau |
| 5 | 4–$SO_3H$ | Cl | 3– | 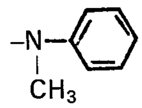 | rotst. marineblau |
| 6 | 4–$SO_3H$ | Cl | 3– | 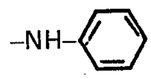 | rotst. marineblau |
| 7 | 4–$SO_3H$ | Cl | 3– | 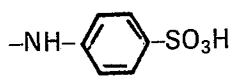 | rotst. marineblau |
| 8 | 4–$SO_3H$ | Cl | 4– | –$NH_2$ | blauviolett |
| 9 | 4–$SO_3H$ | Br | 3– | 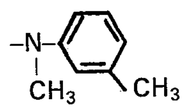 | rotst. marineblau |
| 10 | 4–$SO_3H$ | Br | 3– | –$NH_2$ | rotst. marineblau |
| 11 | 4–$SO_3H$ | Br | 3– | 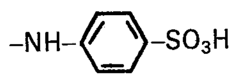 | rotst. marineblau |
| 12 | 4–$SO_3H$ | F | 3– | –$NH_2$ | rotst. marineblau |
| 13 | 4–$SO_3H$ | F | 3– | 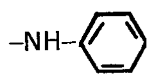 | rotst. marineblau |
| 14 | 4–$SO_3H$ | Cl | 3– | 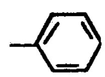 | rotst. marineblau |
| 15 | 4–$SO_3H$ | Cl | 3– | –Cl | rotst. marineblau |
| 16 | 4–$SO_3H$ | Cl | 3– | –$OCH_3$ | rotst. marineblau |
| 17 | 4–$SO_3H$ | Cl | 3– | 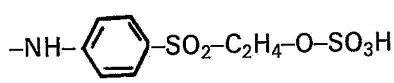 | rotst. marineblau |
| 18 | 4–$SO_3H$ | Cl | 3– | 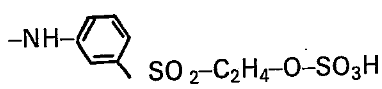 | rotst. marineblau |
| 19 | 4–Cl | $CF_3$ | 3– | 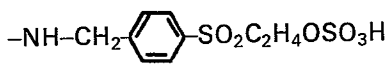 | stark rotst. marineblau |
| 20 | 4–Cl | Cl | 3– | –$NH_2$ | rotst. marineblau |

*Tabelle I* (Fortsetzung)

| Bsp. | Y | X | Stellung Ring M | Z | Farbton |
|---|---|---|---|---|---|
| 21 | 4–Cl | Cl | 3– | 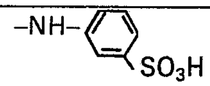 | rotst. marineblau |
| 22 | 3–Cl | $CH_3$ | 3– | $-NH_2$ | rotst. marineblau |
| 23 | 3–Cl | $CH_3$ | 3– | 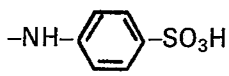 | rotst. marineblau |
| 24 | 4–Cl | $CH_3$ | 3– | $-NH_2$ | rotst. marineblau |
| 25 | 4–Cl | $CH_3$ | 3– | 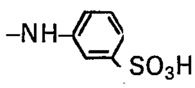 | rotst. marineblau |
| 26 | 4–$CH_3SO_2$ | Cl | 3– | 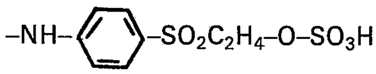 | rotst. marineblau |
| 27 | 4–$CH_3SO_2$ | Cl | 3– | 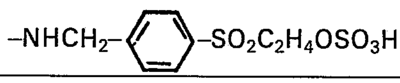 | rotst. marineblau |

**Patentansprüche**

1. Verbindungen der allgemeinen Formel I

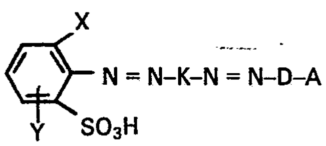 I.

in der

A einen faserreaktiven Rest aus der Chlortriazinreihe, der über eine Imino- oder Iminomethylenbrücke an den Chromophor gebunden ist,

D den Rest einer sulfogruppenhaltigen Diazokomponente der Anilin- oder Aminonaphthalinreihe,

K den Rest einer Kupplungskomponente der Aminohydroxynaphthalinreihe,

X Fluor, Chlor, Brom, $C_1$- bis $C_4$-Alkyl, Trifluormethyl, $C_1$- bis $C_4$-Alkoxy, Phenoxy, Hydroxysulfonyl, Carboxyl, Acetyl, Propionyl, Methylsulfonyl, Ethylsulfonyl, Phenylsulfonyl, $C_1$- bis $C_4$-Alkoxycarbonyl, Phenoxysulfonyl oder gegebenenfalls substituiertes Carbamoyl oder Sulfamoyl und

Y Fluor, Chlor, Brom $C_1$- bis $C_4$-Alkyl, Trifluormethyl, $C_1$- bis $C_4$-Alkoxy, Phenoxy, Phenoxysulfonyl, Acetyl, Propionyl, Methylsulfonyl, Ethylsulfonyl, Phenylsulfonyl, p-Acetylaminophenylsulfonyl, Hydroxysulfonyl, $C_1$- bis $C_4$-Alkoxycarbonyl, Hydroxycarbonyl oder gegebenenfalls substituiertes Carbamoyl oder Sulfamoyl bedeuten.

2. Verbindungen gemäss Anspruch 1, bei denen

X Fluor, Chlor, Brom, Methyl, Trifluormethyl, Hydroxysulfonyl, Methylsulfonyl, Ethylsulfonyl oder Carboxyl ist.

3. Verbindungen gemäss Anspruch 1, bei denen

Y Fluor, Chlor, Brom, Methyl, Ethyl, Trifluormethyl, Hydroxysulfonyl, Methylsulfonyl, Ethylsulfonyl, Phenylsulfonyl, Carboxyl oder gegebenenfalls substituiertes Sulfamoyl ist.

4. Verbindungen gemäss Anspruch 1, bei denen

K der Rest der 1-Amino-8-hydroxynaphthalin-3,6- oder -4,6-disulfonsäure ist.

5. Verbindungen gemäss Anspruch 1, bei denen

D ein gegebenenfalls durch Chlor, Methyl oder Methoxy substituierter 1,3- oder 1,4-Diaminophenylenrest ist.

6. Verbindungen gemäss Anspruch 1, bei denen

A ein Dichlor-, Alkoxychlor-, Phenylchlor- oder Aminochlortriazinrest oder ein Chlortriazinrest mit einer zusätzlichen Reaktivgruppe ist.

**Revendications**

1. Composés de formule générale I

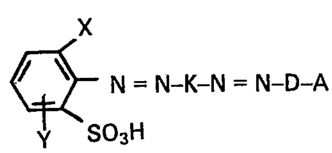 I.

dans laquelle

A représente un radical réactif sur les fibres de la série de la chlorotriazine, qui est fixé au chromophore par un pont imino ou iminométhylène,

D représente le radical d'un composant de diazoïque contenant un groupe sulfo, de la série de l'aniline ou de l'aminonaphthalène,

K représente le radical d'un composant de copulation de la série de l'aminohydroxynaphtalène,

X représente un atome de fluor, de chlore, de brome, un radical alkyle en $C_1$ à $C_4$, trifluorométhyle, alcoxy en $C_1$ à $C_4$, phénoxy, hydroxysulfonyle, carboxyle, acétyle, propionyle, méthylsulfonyle, éthylsulfonyle, phénylsulfonyle, alcoxycarbonyle en $C_1$ à $C_4$, phénoxysulfonyle ou carbamoyle ou sulfamoyle éventuellement substitué, et

Y représente un atome de fluor, de chlore, de brome, un radical alkyle en $C_1$ à $C_4$, trifluorométhyle, alcoxy en $C_1$ à $C_4$, phénoxy, phénoxysulfonyle, acétyle, propionyle, méthylsulfonyle, éthylsulfonyle, phénylsulfonyle, p-acétylaminophénylsulfonyle, hydroxysulfonyle, alcoxycarbonyle en $C_1$ à $C_4$, hydroxycarbonyle ou carbamoyle ou sulfamoyle éventuellement substitué.

2. Composés selon la revendication 1, dans lesquels

X est un atome de fluor, de chlore, de brome, un radical méthyle, trifluorométhyle, hydroxysulfonyle, méthylsulfonyle, éthylsulfonyle ou carboxyle.

3. Composés selon la revendication 1, dans lesquels

Y est un atome de fluor, de chlore, de brome, un radical méthyle, éthyle, trifluorométhyle, hydroxysulfonyle, méthylsulfonyle, éthylsulfonyle, phénylsulfonyle, carboxyle ou sulfamoyle éventuellement substitué.

4. Composés selon la revendication 1, dans lesquels

K est le radical de l'acide 1-amino-8-hydroxynaphtalène-3,6- ou -4,6-disulfonique.

5. Composés selon la revendication 1, dans lesquels

D est un radical 1,3- ou 1,4-diaminophénylène éventuellement substitué par un atome de chlore ou par un radical méthyle ou méthoxy.

6. Composés selon la revendication 1, dans lesquels

A est un radical dichloro-, alcoxychloro-, phénylchloro- ou aminochlorotriazine ou un radical chlorotriazine avec un groupe réactif supplémentaire.

## Claims

1. A compound of the formula I

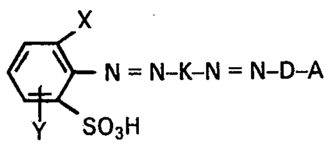

I.

where

A is a fiber-reactive radical of the chlorotriazine series, which is bonded to the chromophore via an imino or iminomethylene bridge,

D is a radical of a sulfo-containing diazo component of the aniline or aminonaphthalene series,

K is the radical of a coupling component of the aminohydroxynaphthalene series,

X is fluorine, chlorine, bromine, $C_1$–$C_4$-alkyl, trifluoromethyl, $C_1$–$C_4$-alkoxy, phenoxy, hydroxysulfonyl, carboxyl, acetyl, propionyl, methylsulfonyl, ethylsulfonyl, phenylsulfonyl, $C_1$–$C_4$-alkoxycarbonyl, phenoxysulfonyl or unsubstituted or substituted carbamoyl or sulfamoyl, and

Y is fluorine, chlorine, bromine, $C_1$–$C_4$-alkyl, trifluoromethyl, $C_1$–$C_4$-alkoxy, phenoxy, phenoxysulfonyl, acetyl, propionyl, methylsulfonyl, ethylsulfonyl, phenylsulfonyl, p-acetylaminophenylsulfonyl, hydroxysulfonyl, $C_1$–$C_4$-alkoxycarbonyl, hydroxycarbonyl or unsubstituted or substituted carbamoyl or sulfamoyl.

2. A compound as claimed in claim 1, wherein

X is fluorine, chlorine, bromine, methyl, trifluoromethyl, hydroxysulfonyl, methylsulfonyl, ethylsulfonyl or carboxyl.

3. A compound as claimed in claim 1, wherein

Y is fluorine, chlorine, bromine, methyl, ethyl, trifluoromethyl, hydroxysulfonyl, methylsulfonyl, ethylsulfonyl, phenylsulfonyl, carboxyl or unsubstituted or substituted sulfamoyl.

4. A compound as claimed in claim 1, wherein

K is the radical of 1-amino-8-hydroxynaphthalene-3,6- or 4,6-disulfonic acid.

5. A compound as claimed in claim 1, wherein

D is a 1,3- or 1,4-diaminophenylene radical which is unsubstituted or substituted by chlorine, methyl or methoxy.

6. A compound as claimed in claim 1, wherein

A is a dichloro-, alkoxychloro-, phenylchloro- or aminochlorotriazine radical or a chlorotriazine radical having an additional reactive group.